# FASCICULE DE BREVET EUROPEEN

(11) **EP 1 399 921 B1**
(45) Date de publication et mention de la délivrance du brevet: **21.01.2009**
(21) Numéro de dépôt: 02751255.7
(22) Date de dépôt: 17.06.2002
(51) Int. Cl.: G11B 7/26

(54) **PROCEDE DE FABRICATION D'UNE MATRICE DE DISQUES OPTIQUES**
VERFAHREN ZUR HERSTELLUNG EINER MATRIZE FÜR OPTISCHE PLATTEN
METHOD FOR THE PRODUCTION OF AN OPTICAL DISK MATRIX

(30) Priorité: 26.06.2001 FR 0108423
(43) Date de publication de la demande: 24.03.2004
(73) Titulaire: Kochka Technology, 1400 Caen (FR)
(72) Inventeur: Pirot, Francois-Xavier, 14120 Mondeville (FR)
(74) Mandataire: Breese, Pierre
(86) Numéro de dépôt international: PCT/FR2002/002084
(87) Numéro de publication internationale: WO 2003/001521

(56) Documents cités:
- WO-A-99/18572
- DE-A- 19 830 293

## Description

La présente invention concerne le domaine des disques optiques, et plus précisément le domaine de la fabrication de matrices pour le pressage de disques optiques.

La fabrication de matrices, appelée usuellement «mastering» consiste à intégrer sur un support intermédiaire les informations de personnalisation destinées au pressage industriel de disques optiques. La qualité de la matrice détermine la qualité du produit final, et cette opération est réalisée dans l'état de la technique par des solutions longues et onéreuses, mettant en oeuvre des équipements complexes, dont la mise en oeuvre est souvent centralisée auprès de fournisseurs spécialisés, qui réalisent pour le compte de plusieurs sociétés industrielles de pressage les matrices personnalisées. Ces matrices son ensuite utilisées pour le moulage de disques en polycarbonate. Elles se présentent sous forme de galettes de nickel portant les informations à reproduire sous forme de micro-reliefs formant par moulages des cuvettes d'environ 150 nanomètres d'épaisseur et de 0,4x0, 3µm pour les DVD ou de 0,8x1 µm pour les CD.

On connaît par exemple brevet PCT WO9918572 décrivant un procédé de fabrication d'une matrice de pressage permettant de produire des disques optiques. Ce procédé consiste à appliquer un photorésist sur la plaque d'une matrice de pressage, puis à structurer le film de photorésist ainsi appliqué. Cette étape de structuration consiste successivement à sublimer localement, et à chauffer ledit film de photorésist avant de le soumettre à une étape d'exposition supplémentaire dans la gamme des ultraviolets à courte longueur d'onde, avant son traitement thermique final, la dose efficace de cette étape d'exposition supplémentaire variant entre 4.10-4 et 5.10-2 J/cm2.

On connaît également des solutions pour la gravure « à l'unité » de disque. Le brevet PCT WO0008643 décrit par exemple un substrat prégravé pour un disque à mémoire enregistrable par une contrainte magnétique, magnéto-optique ou optique à transition de phase. Ce substrat prégravé comprend un support ayant à sa surface une couche de surface en un matériau réflecteur et permettant d'obtenir une surface à poli optique et au moins une couche enregistrable, ces couches comportant une succession de microcuvettes et/ou sillons représentant un signal de préformatage.

Le but de la présente invention est de proposer un procédé de fabrication de matrices compatible avec une utilisation pour le pressage industriel par moulage de polycarbonate, et pas seulement pour une gravure « à l'unité », tout en simplifiant la fabrication des matrices en évitant le recours à un support initial en verre et la multiplication des étapes de fabrication qui en découle.

A cet effet, l'invention concerne selon son acception la plus générale un procédé de fabrication d'une matrice de disques optiques caractérisé en ce qu'il comporte une étape de fabrication d'un précurseur constitué par un substrat en matériau métallique, avantageusement un matériau apte à la gravure, et présentant au moins une trace de guidage [protubérante ou en creux], une étape de préparation dudit précurseur constituant à déposer sur le substrat au moins une couche d'un premier matériau, puis déposer éventuellement un second matériau, de façon que le premier matériau affleure la surface du précurseur hors des traces de guidage, le matériau affleurant la surface du précurseur sur les traces de guidage étant appelé « second matériau ».

La surface de la matrice est érodée avant le dépôt d'une résine pour ne laisser subsister que l'un desdits deux matériaux au-dessus des traces de guidage. Selon une première variante, les traces de guidage en matériau 2 sont protubérantes, métalliques, ce métal, apte à être gravé, affleure la surface du précurseur sur la trace de guidage, et ce métal est présent sur le substrat antérieurement au dépôt du matériau 1.

Selon une seconde variante, les traces de guidage sont en creux (sillon). Il affleure à la surface du précurseur un second matériau dit « matériau 2 », déposé postérieurement au matériau 1.

L'invention consiste subséquemment à déposer sur la surface ainsi préparée une résine réactive [par exemple une résine photosensible ou bien un colorant susceptible d'être localement sublimé], le procédé consistant ensuite à personnaliser le précurseur en structurant la surface réactive en fonction des informations spécifiques à la matrice de façon à supprimer localement ladite résine réactive, le procédé comporte une étape de révélation consistant à procéder à la gravure des zones de second matériau placées au-dessus des traces de guidage démasquées et à supprimer ensuite le dépôt subsistant de résine et le premier matériau hors des zones où se trouve le second matériau.

De préférence, le premier matériau (matériau 1) est constitué d'au moins une couche de matériau de propriétés optiques sensiblement différentes de celle du matériau 2 à une longueur d'onde utilisée dans un équipement permettant de structurer la résine réactive.

Selon une première variante, les traces de guidage sont constituées par au moins une spirale protubérante.

Selon une deuxième variante, les traces de guidage sont constituées par au moins un sillon.

Avantageusement, le matériau métallique constituant le substrat est choisi dans le groupe comprenant le nickel, les alliages à base de nickel, le chrome, les alliages à base de chrome, les nitrures de titane, le tantale, le molybdène et leurs alliages.

Selon un mode de mise en oeuvre particulier de la seconde variante, le second matériau déposé postérieurement au premier matériau, est constitué d'au moins une couche permettant d'empêcher de graver localement le premier matériau sous le second matériau à l'étape de personnalisation du précurseur.

Selon une première variante, la résine réactive est une résine photo-réactive résistant aux produits de gravure du matériau métallique.

Selon une deuxième variante, la résine réactive est une résine photosensible.

De préférence, l'étape de préparation du précurseur comporte une étape de planarisation avant dépôt de la résine réactive.

Avantageusement, ladite étape de planarisation est réalisée par polissage mécano-chimique, par polissage sur film sec, par le procédé dit « etch back », consistant à déposer sur le précurseur couvert d'un matériau diélectrique épais de l'ordre de 200 à 500nm une couche de résine polymère ayant une surface plane, puis à graver la surface avec un procédé de gravure sèche enlevant à une vitesse identique résine et matériau diélectrique jusqu'à disparition totale de la résine, par dépôt de couche polymère planarisante, par exemple constituée de résine photosensible Novolak ou bien de matériau polyimide, subissant un premier recuit doux, suivi d'une gravure contrôlée de ladite couche polymère afin de découvrir le matériau affleurant « matériau 2 », puis d'un recuit énergique à température supérieure à 110°C.

Selon un mode de réalisation avantageux, l'étape de fabrication des précurseurs comportant les traces de guidage comporte une étape de galvanoplastie.

Avantageusement, l'étape de fabrication des précurseurs comportant les traces de guidage comporte une étape de moulage du substrat.

L'invention concerne également un procédé de fabrication d'une matrice de pressage de disque optique comportant une étape de fabrication d'un précurseur constitué d'un matériau métallique portant des éléments de guidage de largeur radiale prédéterminée lors d'une première étape de fabrication de substrat, ces éléments de guidage étant localement gravés par un procédé de révélation masqué par une résine réactive structurée caractérisé en ce que le premier matériau (dit « matériau 1 ») est d'une nature insensible à la gravure de l'élément de guidage, la largeur radiale à l'issu du procédé des éléments individuels d'information dégagés de l'élément de guidage étant alors déterminée par la largeur radiale initiale des éléments de guidage, et la longueur dans le sens tangentiel des éléments individuels d'information est déterminée par le procédé de structuration de la résine réactive.

Selon une variante, l'étape de préparation du précurseur comporte une opération de dépôt sur le substrat métallique d'une première couche de séparation présentant une épaisseur inférieure aux reliefs de guidage, et une couche extérieure en un matériau diélectrique, et une opération de planarisation avant dépôt de la résine réactive par abrasion pour laisser subsister une épaisseur de revêtement comprise entre la hauteur des reliefs de guidage et ladite hauteur augmentée par l'épaisseur de la couche de séparation.

L'invention concerne encore un procédé de fabrication d'une matrice de pressage de disque optique comportant une étape de fabrication d'un substrat constitué d'un matériau métallique portant des éléments de guidage métalliques protubérants, ces éléments de guidage étant localement gravés par un procédé de révélation masqué par une résine réactive structurée caractérisé en ce que la pente entre la base et le sommet des éléments d'information dans le sens radial générée lors d'un premier procédé de formation du substrat, typiquement comprise entre 20 et 60° par rapport au plan de référence du substrat, est inchangée lors des procédés de dépôts et enlèvements aboutissant à une matrice individualisée, alors que cette pente des éléments d'information dans le sens tangentiel, typiquement comprise entre 40 et 90° par rapport au plan de référence du substrat, est générée par un procédé de gravure masqué par une résine structurée.

Avantageusement le substrat métallique est fabriqué en superposant une première couche métallique au substrat antérieurement au dépôt de matériau 1, ladite couche métallique ayant la propriété de pouvoir être gravée de manière sélective par rapport au substrat.

Avantageusement, l'étape de préparation du précurseur comporte une première opération de dépôt du premier matériau, suivie d'une opération de dépôt d'une couche de séparation présentant une épaisseur inférieure aux reliefs de guidage puis d'une couche extérieure en matériau diélectrique, et une opération de planarisation par abrasion avant dépôt de la résine réactive pour laisser subsister une épaisseur de revêtement comprise entre la hauteur des reliefs de guidage et ladite hauteur augmentée par l'épaisseur de la couche de séparation.

Selon une variante, le premier matériau est gravé lors de ladite étape de personnalisation des matrices en utilisant le dit second matériau comme masque, caractérisé en ce que le substrat métallique d'origine comporte des sillons de guidage dont les bords ont une pente comprise entre 20 et 60° par rapport au plan principal du substrat, le second matériau ayant en conséquence une épaisseur variable dans un sens radial, et en ce que le second matériau est lentement gravé lors de la gravure du premier matériau, entraînant une pente du premier matériau dans le sens radial comprise entre 20 et 60° par rapport au plan du substrat, et une pente comprise entre 40 et 90° par rapport au substrat dans le sens tangentiel aux pistes.

L'invention concerne également un précurseur constitué par un substrat métallique préformaté présentant des traces de guidage qui sont constituées par au moins une spirale protubérante, une couche diélectrique, l'épaisseur de revêtement étant comprise entre la hauteur des reliefs de guidage et ladite hauteur augmentée par l'épaisseur de la couche de séparation, avec une marge égale ou inférieure à plus ou moins 20% de l'épaisseur de référence, ce revêtement étant destiné à recevoir une résine réactive.

L'invention concerne également un précurseur constitué par un substrat métallique préformaté présentant des traces de guidage qui sont constituées par au moins une spirale en creux, une première couche, éventuellement une couche de séparation, une seconde couche présentant des propriétés optiques sensiblement différentes de celle des couches sous-jacentes à une longueur d'onde utilisée dans un équipement permettant de structurer la résine réactive, l'épaisseur de la seconde couche étant sensiblement comprise entre la hauteur des reliefs de guidage et ladite hauteur augmentée par l'épaisseur de la couche de séparation, avec une marge égale ou inférieure à plus ou moins 20% de l'épaisseur de référence, ce revêtement étant destiné à recevoir une résine réactive.

La présente invention sera mieux comprise à la lecture de la description d'un exemple non limitatif de réalisation, faisant référence aux dessins annexés où :
les figures 1 à 4 représentent des vues en coupe radiale d'un précurseur à différentes phases de préparation ;
les figures 5 à 11 représentent des vues en coupe radiale d'un précurseur à différentes phases de préparation, selon une variante de réalisation.

Le procédé décrit à titre d'exemple non limitatif consiste à préparer tout d'abord un précurseur en nickel présentant les traces de guidage « standard » sans aucune information de personnalisation.

L'information de guidage est constituée par un sillon en relief dont les caractéristiques (pas, largeur, circularité) sont optimisées pour assurer un fonctionnement du produit final avec une grande précision.

Le précurseur peut être préparé à partir d'une feuille de nickel de 138 mm de diamètre ou plus, correspondant au diamètre des plaquettes (wafer) de silicium utilisés dans l'industrie des semi-conducteurs, par exemple 150mm. Le précurseur peut être préparé à partir d'une feuille de nickel de 300 micromètres d'épaisseur ou plus, correspondant à une épaisseur similaire à celle des wafers de silicium utilisés dans l'industrie des semi-conducteurs.

La feuille peut présenter des dimensions (longueur, largeur) permettant de préparer simultanément sur le même support une pluralité de précurseurs qui seront ensuite découpés par estampage pour former des galettes de pressage discales destinées à être introduites dans le moule de pressage.

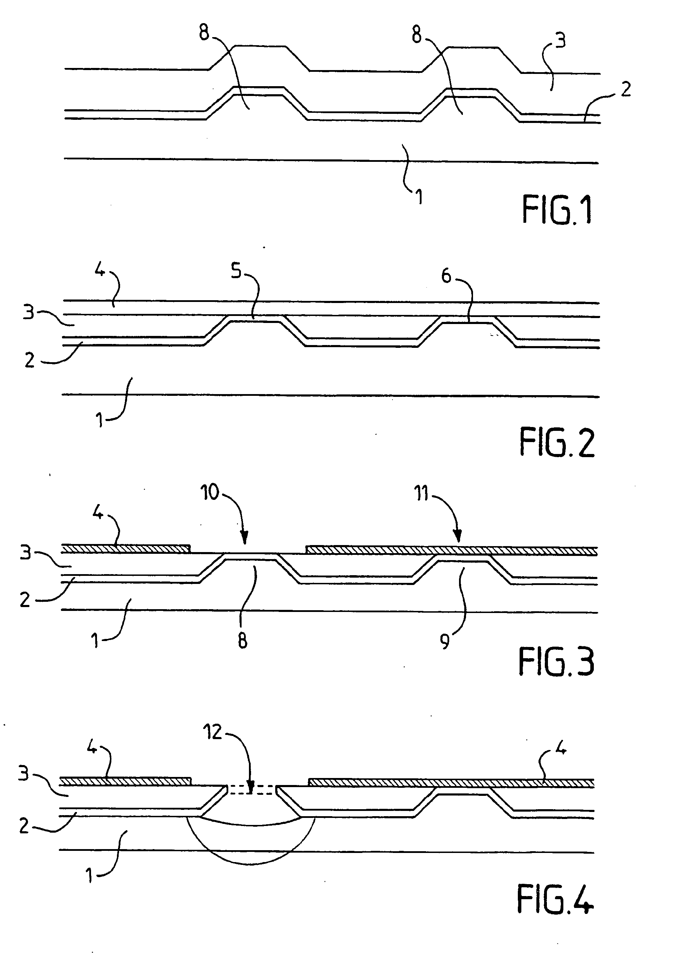

La fabrication de ce précurseur peut être réalisée selon différentes techniques, notamment par reproduction par galvanoplastie à partir d'une matrice de type « glass ». Le substrat (1) en nickel ou matériau analogue est ensuite préparé selon un nombre réduit d'opération. La première série d'opération représentée en figure 1 consiste à déposer deux couches de matériaux diélectriques (2, 3) sur le substrat en nickel (1) :
dépôt pleine tranche par pulvérisation réactive ou selon un procédé comparable d'une première couche mince d'un diélectrique (2) formant une couche de séparation. Ce matériau est par exemple un nitrure de silicium. L'épaisseur de cette couche de séparation (2) est de quelques nanomètres. Elle forme un film d'épaisseur uniforme épousant la forme des sillons de guidage (8).

Un deuxième dépôt (3) est formé sur cette couche de séparation. Ce deuxième dépôt est un matériau diélectrique, par exemple de la silice, résistant à la gravure du substrat lors des opérations ultérieures. Il forme également un film d'épaisseur uniforme recouvrant notamment la trace de guidage, et épousant donc le relief du premier film (2).

L'étape suivante représentée en figure 2 consiste à procéder à un polissage mécano-chimique de façon à laisser affleurer les sommets (5, 6) des spirales sur lesquels subsiste la couche de séparation (2). Par contre, la couche de diélectrique (3) disparaît au niveau des spirales en relief, et ne subsiste que dans les espaces compris entre les spires.

Après ce polissage, on procède à l'enduction de la surface sur une tournette avec une résine photosensible (4) très mince, d'une épaisseur d'une dizaine de nanomètres.

Le précurseur est alors éventuellement découpé en galettes et est prêt à être personnalisé.

Cette étape de personnalisation est représentée en figure 3. Elle consiste à insoler la résine photosensible avec un laser (par exemple une diode laser 400 nanomètres) piloté pour former des spots sur la surface du précurseur conforme aux informations à coder sur la crête des sillons (8, 9), et donc, par complémentarité, des espaces à préserver pour former des micro-reliefs. L'insolation locale se traduira par la suppression localisée de la résine photosensible et la formation d'un trou (10) laissant apparaître le substrat revêtu de la couche diélectrique hors la crête de la spirale. L'absence de spot d'insolation se traduira par le maintien de la résine (11) protégeant localement la crête (9) de la spirale.

L'opération suivante est représentée en figure 4. Elle consiste à graver la surface du précurseur de façon connue, la résine formant un masque de gravure. Cette gravure est par exemple réalisée par une attaque chimique. Cette gravure se traduira par la formation d'un micro trou (12) aux endroits où la résine a été insolée, ces micro-trous étant situés sur la spirale de guidage formée lors de l'étape de préparation du précurseur.

On termine ensuite le processus en retirant la résine et le diélectrique subsistant, cette opération étant facilitée par la présence de la couche de séparation (2). Aux endroits de la spirale recouverts d'une résine qui n'a pas reçu d'insolation dans les étapes précédentes subsiste donc une portion de la crête, identique aux microreliefs d'une matrice de moulage de disques optiques réalisée par les procédés usuels.

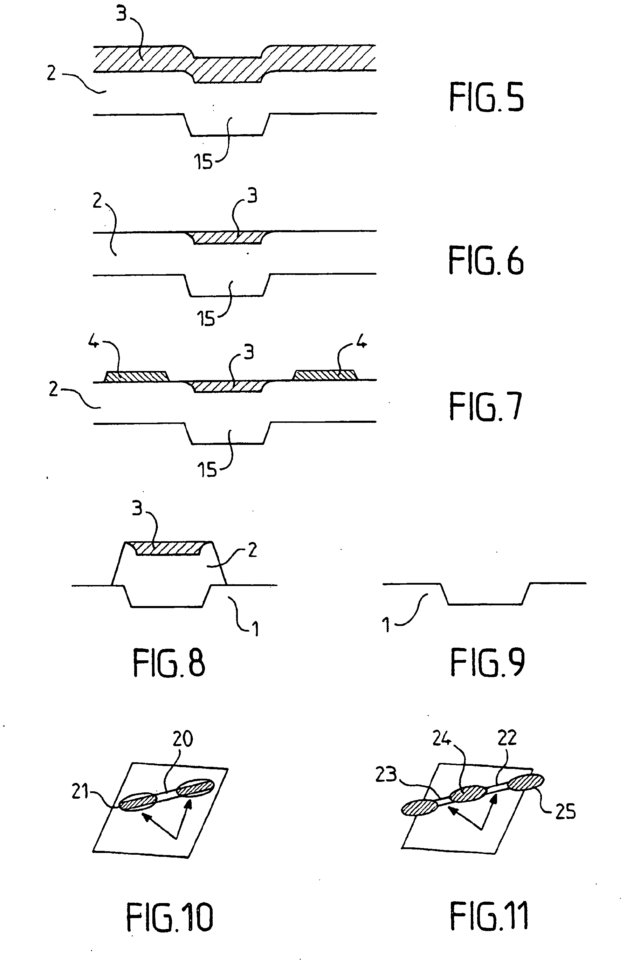

Les figures 5 à 9 concernent un autre exemple de mise en oeuvre de l'invention, dans lequel la trace de guidage est formée par un sillon de guidage et non pas par un rail de guidage.

La première étape consiste à déposer sur le substrat (1) un revêtement, par exemple de silicium (2) épousant la forme du relief, et notamment le sillon de guidage (15), et constituant une couche de séparation. Un deuxième revêtement, par exemple de silice (3) est déposé sur le premier revêtement. L'étape suivante (figure 6) consiste à procéder à un polissage mécano-chimique de façon à laisser affleurer la couche de séparation en silicium (2) au niveau des sillons (15). Par contre, la couche de second revêtement en silice disparaît au niveau des espaces compris entre les spires, et ne subsiste que dans les spirales en creux.

Une résine photosensible est ensuite déposée sur la surface de l'ensemble ainsi préparé (figure 7). Le précurseur est alors prêt à être personnalisé. Cette étape consiste à insoler la résine photosensible avec un laser (par exemple une diode laser 400 nanomètres) piloté pour former des spots sur la surface du précurseur conforme aux informations à coder au-dessus du creux des sillons, et donc, par complémentarité, des espaces à préserver pour former des micro-reliefs. L'insolation locale se traduira par la suppression localisée de la résine photosensible et la formation d'un trou laissant apparaître le substrat revêtu du second revêtement, et de la couche de séparation hors la crête de la spirale. L'absence de spot d'insolation se traduira par le maintien de la résine (11) protégeant localement le revêtement de la spirale.

L'opération suivante (fig. 8) consiste à graver la surface du précurseur de façon connue, la résine formant un masque de gravure. Cette gravure est par exemple réalisée par usinage ionique réactif, ou RIE utilisant le gaz CHF3. Cette gravure se traduira par la formation d'un micro trou (12) aux endroits où la résine a été insolée, ces micro-trous étant situés sur la spirale de guidage formée lors de l'étape de préparation du précurseur, dans lesquels le second revêtement est gravé. La résine est ensuite enlevée de l'ensemble du substrat, en utilisant un solvant ou dans un plasma réactif à base d'oxygène. Le matériau de séparation est ensuite gravé, par exemple également dans un procédé d'usinage ionique réactif utilisant du SF6, les portions de second revêtement non gravées lors de l'étape précédente étant utilisées comme masques. Il subsiste donc des parties protubérantes d'un sandwich constitué de matériau de séparation silicium et de second revêtement de silice.

La figure 8 représente le résultat après gravure de la couche de séparation (2), au niveau d'une zone protégée par la résine. Elle présente une surface de nickel, formant le substrat (1), sur laquelle se présente des pits formés par une couche de matériau de séparation (2) et une couche du second matériau (3).

La figure 9 représente une vue en coupe d'une zone dont la résine à été dégradée par photoinsolation.

Les figures 10 et 11 représentent des vues de dessus des deux segments. Les zones découvertes (20, 21) forment, après traitement, des sillons résiduels (22, 23) séparant des pits (24, 25).

Le procédé décrit dans les deux modes de réalisation produit des pits d'information dont la largeur d'une part et la longueur d'autre part proviennent de deux procédés différents, à deux étapes différentes de la fabrication. Ceci n'est pas le cas dans le procédé classique, où tout est déterminé par un procédé de photolithographie. La conséquence la plus importante est qu'il permet d'envisager la mise en oeuvre d'une tête d'écriture unique pour l'écriture des deux formats CD et DVD.

De manière similaire et pour les mêmes raisons, les pentes des pits peuvent être différentes dans le sens radial (interpiste) et tangentiel (entre deux pits). La pente des pistes dans le sens tangentiel ayant une influence sur la qualité du signal (plus c'est vertical, plus la transition est nette et meilleur est le signal), alors que les pentes en général ont une influence sur la qualité du démoulage disque/matrice, et donc sur le temps de cycle de fabrication (moins c'est vertical, mieux cela se démoule), cette possibilité peut se révéler intéressante à terme : matrice ayant des pentes « molles » radialement, mais très raides dans le sens tangentiel.

Une des difficultés de la méthode est que la gravure de métal doit être uniforme, rien ne venant l'arrêter automatiquement. Pour cela, on peut réaliser un premier dépôt sur le précurseur d'une couche métallique bien choisie (alliage de nickel par exemple) qui se grave à une vitesse différente du substrat métallique sous-jacent, permettant d'introduire une couche d'arrêt sur au moins une partie de la surface du pit. Ceci a l'avantage de créer un pit qui soit « automatiquement » mieux défini en profondeur.

Selon un mode de fabrication par galvanoplastie, l'étape de fabrication des précurseurs comporte une étape de dépôt d'une couche de séparation et d'au moins une couche d'un matériau conducteur dans la matrice de préparation, puis de dépôt du matériau de substrat sur ledit dépôt de matériau conducteur, puis de séparation desdits dépôts avec la matrice. Le matériau de séparation est formé de chrome par exemple.

Lors de l'étape d'exposition du précurseur à la source lumineuse de gravure, il est nécessaire de fixer le substrat sur un support rotatif, avec calage précis assurant une parfaite planéité et un centrage garanti. Une solution avantageuse consiste à utiliser un support rotatif magnétique assurant une interaction magnétique avec le substrat en nickel ou en un matériau magnétique. L'invention porte à cet effet également sur un équipement de gravure comportant un support rotatif magnétique assurant le maintien d'un précurseur lors de l'étape de gravure.

La séparation entre le support magnétique et le précurseur est réalisé à l'aide d'une série de plots escamotables venant en érection par rapport à la surface d'appui du précurseur, après l'opération de gravure.

## Revendications

1. Procédé de fabrication d'une matrice de disques optiques **caractérisé en ce qu'**elle comporte une étape de fabrication d'un précurseur constitué par un substrat comportant au moins une couche en matériau métallique, et présentant au moins une trace de guidage [protubérante ou en creux], une étape de préparation dudit précurseur constituant à superposer sur le substrat au moins une couche d'un premier matériau (2), et un second matériau (3), différent du premier matériau (2), à éroder la surface ainsi préparée pour ne laisser subsister que l'un desdits matériaux à l'emplacement des traces de guidage et à déposer sur la surface ainsi préparée une résine réactive [par exemple une résine photosensible], le procédé consistant ensuite à personnaliser le précurseur en structurant la surface réactive en fonction des informations spécifiques à la matrice de façon à supprimer localement ladite résine réactive, le procédé comporte une étape de révélation consistant à procéder à la gravure des zones de second matériau à l'emplacement des traces de guidage démasquées et à supprimer ensuite le dépôt subsistant de résine et le premier matériau hors des zones où il est couvert par le second matériau.

2. Procédé de fabrication d'une matrice de disques optiques selon la revendication 1, **caractérisé en ce que** le second matériau est métallique, identique ou différent du matériau du substrat, et présent sur le substrat antérieurement au dépôt du premier matériau, et **en ce que** le premier matériau est constitué d'au moins une couche de matériau de propriétés optiques sensiblement différentes de celle du matériau métallique à une longueur d'onde utilisée dans un équipement permettant de structurer la résine réactive.

3. Procédé de fabrication d'une matrice de pressage de disque optique selon la revendication 1 ou 2, **caractérisé en ce que** les traces de guidage sont constituées par au moins une spirale protubérante.

4. Procédé de fabrication d'une matrice de disques optiques selon la revendication 1 ou 3, **caractérisé en ce que** le premier matériau est constitué d'au moins une couche de matériau de propriété optique sensiblement différente de celle du second matériau à une longueur d'onde utilisée dans un équipement permettant de structurer la résine réactive, et **en ce que** le second matériau, déposé postérieurement au premier matériau, est constitué d'au moins une couche permettant d'empêcher de graver localement le premier matériau sous le second matériau à l'étape de personnalisation du précurseur.

5. Procédé de fabrication d'une matrice de pressage de disque optique selon la revendication 1 ou 4, **caractérisé en ce que** les traces de guidage sont constituées par un sillon

6. Procédé de fabrication d'une matrice de pressage de disque optique selon l'une quelconque des revendications précédentes, **caractérisé en ce que** le matériau métallique constituant le substrat est choisi dans le groupe comprenant le nickel, les alliages à base de nickel, le chrome, les alliages à base de chrome, les nitrures de titane, le tantale, le molybdène et leurs alliages.

7. Procédé de fabrication d'une matrice de pressage de disque optique selon l'une quelconque des revendications précédentes, **caractérisé en ce que** la résine réactive est une résine photo-réactive résistant aux produits de gravure du matériau métallique.

8. Procédé de fabrication d'une matrice de pressage de disque optique selon l'une quelconque des revendications 1 à 7, **caractérisé en ce que** la résine réactive est une résine photosensible.

9. Procédé de fabrication d'une matrice de pressage de disque optique selon l'une quelconque des revendications 1 à 8, **caractérisé en ce que** l'étape de préparation du précurseur comporte une étape de planarisation avant dépôt de la résine réactive.

10. Procédé de fabrication d'une matrice de pressage de disque optique selon la revendication 9, **caractérisé en ce que** ladite étape de planarisation est réalisée par polissage mécano-chimique.

11. Procédé de fabrication d'une matrice de pressage de disque optique selon la revendication 9,
**caractérisé en ce que** l'étape de planarisation est réalisée par polissage sur film sec.

12. Procédé de fabrication d'une matrice de pressage de disque optique selon la revendication 9, **caractérisé en ce que** l'étape de planarisation est réalisée par le procédé dit « etch back », consistant à déposer sur le précurseur couvert d'un matériau diélectrique épais de l'ordre de 200 à 500nm une couche de résine polymère ayant une surface plane, puis à graver la surface avec un procédé de gravure sèche enlevant à une vitesse identique résine et matériau diélectrique jusqu'à disparition totale de la résine.

13. Procédé de fabrication d'une matrice de pressage de disque optique selon la revendication 9, **caractérisé en ce que** l'étape de planarisation est réalisée par dépôt de couche polymère planarisante, par exemple constituée de résine photosensible Novolak ou bien de matériau polyimide, subissant un premier recuit doux, suivi d'une gravure contrôlée de ladite couche polymère afin de découvrir le matériau affleurant « matériau 2 », puis d'un recuit énergique à température supérieure à 110°C.

14. Procédé de fabrication de disques optiques selon l'une quelconque des revendications précédentes, **caractérisé en ce que** l'étape de fabrication des précurseurs comportant les traces de guidage comporte une étape de galvanoplastie.

15. Procédé de fabrication de disques optiques selon l'une quelconque des revendications précédentes, **caractérisé en ce que** l'étape de fabrication des précurseurs comportant les traces de guidage comporte une étape de moulage du substrat.

16. Procédé de fabrication d'une matrice de pressage de disque optique comportant une étape de fabrication d'un précurseur constitué d'un matériau métallique portant des éléments de guidage de largeur radiale prédéterminée lors d'une première étape de fabrication de substrat, ces éléments de guidage étant localement gravés par un procédé de révélation masqué par une résine réactive structurée suivant l'une quelconque des revendications 1 à 15, **caractérisé en ce que** le premier matériau est d'une nature insensible à la gravure de l'élément de guidage, la largeur radiale à l'issu du procédé des éléments individuels d'information dégagés de l'élément de guidage étant alors déterminée par la largeur radiale initiale des éléments de guidage, et la longueur dans le sens tangentiel des éléments individuels d'information est déterminée par le procédé de structuration de la résine réactive.

17. Procédé de fabrication d'une matrice de pressage de disque optique selon l'une quelconque des revendications 1 à 3 ou 6 à 16, **caractérisé en ce que** l'étape de préparation du précurseur comporte une opération de dépôt sur le substrat métallique d'une première couche de séparation présentant une épaisseur inférieure aux reliefs de guidage, et une couche extérieure en un matériau diélectrique, et une opération de planarisation avant dépôt de la résine réactive par abrasion pour laisser subsister une épaisseur de revêtement comprise entre la hauteur des reliefs de guidage et ladite hauteur augmentée par l'épaisseur de la couche de séparation.

18. Procédé de fabrication d'une matrice de pressage de disque optique comportant une étape de fabrication d'un substrat constitué d'un matériau métallique portant des éléments de guidage métalliques protubérants, ces éléments de guidage étant localement gravés par un procédé de révélation masqué par une résine réactive structurée suivant l'une quelconque des revendications 1 à 16, **caractérisé en ce que** la pente entre la base et le sommet des éléments d'information dans le sens radial générée lors d'un premier procédé de formation du substrat, typiquement comprise entre 20 et 60° par rapport au plan de référence du substrat, est inchangée lors des procédés de dépôts et enlèvements aboutissant à une matrice individualisée, alors que cette pente des éléments d'information dans le sens tangentiel, typiquement comprise entre 40 et 90° par rapport au plan de référence du substrat., est générée par un procédé de gravure métallique masqué par une résine structurée.

19. Procédé de fabrication d'une matrice de pressage de disques optiques suivant l'une quelconque des revendications 1 à 3 et 6 à 18, **caractérisé en ce que** le précurseur est constitué par superposition du substrat métallique, du second matériau métallique, avant les dépôts de matériau 1, ladite couche métallique ayant la propriété de pouvoir être gravée de manière sélective par rapport au substrat.

20. Précurseur pour la mise en oeuvre du procédé conforme à l'une au moins des revendications 1 à 3 ou 6 à 19, **caractérisé en ce qu'**il est constitué par un substrat métallique préformaté présentant des traces de guidage qui sont constituées par au moins une spirale protubérante, une couche diélectrique de revêtement , dont la partie la plus épaisse a une épaisseur comprise entre la hauteur des reliefs de guidage et ladite hauteur augmentée par l'épaisseur de la couche de séparation, avec une marge égale ou inférieure à plus ou moins 20% de l'épaisseur de référence, ce revêtement étant destiné à recevoir une résine réactive.

21. Procédé de fabrication de disque optique selon l'une quelconque des revendications 1 ou 4 à 15, **caractérisé en ce que** l'étape de préparation du précurseur comporte une première opération de dépôt du premier matériau, suivie d'une opération de dépôt d'une couche de séparation présentant une épaisseur inférieure aux reliefs de guidage puis d'une couche extérieure en matériau diélectrique, et une opération de planarisation par abrasion avant dépôt de la résine réactive pour laisser subsister une épaisseur de revêtement comprise entre la hauteur des reliefs de guidage et ladite hauteur augmentée par l'épaisseur de la couche de séparation.

22. Procédé de fabrication d'une matrice de pressage de disque optique suivant l'une quelconque des revendications 1, 4 à 16 ou 21, **caractérisé en ce que** le dit premier matériau est gravé lors de ladite étape de personnalisation des matrices en utilisant le dit second matériau comme masque, **caractérisé en ce que** le substrat métallique d'origine comporte des sillons de guidage dont les bords ont une pente comprise entre 20 et 60° par rapport au plan principal du substrat, le second matériau ayant en conséquence une épaisseur variable dans un sens radial, et **en ce que** le second matériau est lentement gravé lors de la gravure du premier matériau, entraînant une pente du premier matériau dans le sens radial comprise entre 20 et 60° par rapport au plan du substrat, et une pente comprise entre 40 et 90° par rapport au substrat dans le sens tangentiel aux pistes.

23. Précurseur pour la mise en oeuvre du procédé conforme à l'une au moins des revendications 1 ou 4 à 16, **caractérisé en ce qu'**il est constitué par un substrat métallique préformaté présentant des traces de guidage qui sont constituées par au moins une spirale en creux, une première couche, éventuellement une couche de séparation, une seconde couche présentant des propriétés optiques sensiblement différentes de celle des couches sous-jacentes à une longueur d'onde utilisée dans un équipement permettant de structurer la résine réactive, l'épaisseur de la partie la plus épaisse de la seconde couche étant sensiblement comprise entre la hauteur des reliefs de guidage et ladite hauteur augmentée par l'épaisseur de la couche de séparation, avec une marge égale ou inférieure à plus ou moins 20% de l'épaisseur de référence, ce revêtement étant destiné à recevoir une résine réactive.

24. Procédé de fabrication d'une matrice de pressage de disque optique selon l'une quelconque des revendications 1 à 7, **caractérisé en ce que** la résine réactive est une résine structurée par sublimation localisée sous l'effet d'un rayonnement.

25. Procédé de fabrication de disques optiques selon l'une quelconque des revendications 1 à 14, **caractérisé en ce que** l'étape de fabrication des précurseurs comporte éventuellement une étape de dépôt d'une couche de séparation, au moins une étape de dépôt d'une couche d'un matériau conducteur dans la matrice de préparation, puis du dépôt du matériau de substrat sur ledit dépôt de matériau conducteur, puis de séparation desdits dépôts avec la matrice.

26. Équipement de gravure pour la mise en oeuvre du procédé selon l'une au moins des revendications 1 à 13, **caractérisé en ce qu'**il comporte un support rotatif magnétique assurant le maintien d'un précurseur lors de l'étape de gravure.

27. Équipement de gravure pour la mise en oeuvre du procédé selon la revendication 1, **caractérisé en ce qu'**il présente une série de plots escamotables venant en érection par rapport à la surface d'appui du précurseur sur ledit support rotatif magnétique, après l'opération de gravure.

## Claims

1. A method for producing an optical disc die **characterised in that** it includes the step of manufacturing a precursor composed of a substrate including at least one layer made of a metallic material and having at least one guiding trace (protruding or embossed), a step of preparing said precursor consisting in superimposing on the substrate at least one layer of a first material (2), and a second material (3) different from the first material (2), in eroding the surface so prepared to leave only one of said materials at the location of the guiding traces, and in depositing on the surface so prepared a reactive resin (for example a photosensitive resin), the method consisting then in customising the precursor by structuring the reactive surface as a function of information specific to the die, so as to locally remove said reactive resin, the method includes a step of charring consisting in carrying out the etching of the zones with the second material at the location of the unmasked guiding traces, and in removing afterwards the remaining deposition of resin and the first material out of the zones where it is covered by the second material.

2. A method for manufacturing an optical disc die according to claim 1, **characterised in that** the second material is metallic, identical or similar to or different from the material of the substrate and present on the substrate prior to the deposition of the first material, and **in that** the first material is composed of at least one layer of a material having optical properties substantially different from those of the metallic material at a wavelength used in equipment making it possible to structure the reactive resin.

3. A method for manufacturing an optical disc pressing die according to claim 1 or 2, **characterised in that** the guiding traces are composed of at least one protruding spiral.

4. A method for manufacturing an optical disc die according to claim 1 or 3, **characterised in that** the first material is composed of at least one layer of the material having optical properties substantially different from those of the second material at a wavelength used in an equipment making it possible to structure the reactive resin and **in that** a second material deposited after the first material is composed of at least one layer making it possible to prevent the local etching of the first material under the second material during the step of the customisation of the precursor.

5. A method for manufacturing an optical disc pressing die according to claim 1 or 4, **characterised in that** the guiding traces consist of a groove.

6. A method for manufacturing an optical disc pressing die according to any one of the preceding claims, **characterised in that** the metallic material composing the substrate is selected in the group comprising nickel, nickel-based alloys, chromium, chromium-based alloys, titanium nitrates, tantalum, molybdenum and the alloys thereof.

7. A method for manufacturing an optical disc pressing die according to any one of the preceding claims, **characterised in that** the reactive resin is a photo-reactive resin resisting the products for etching the metallic material.

8. A method for manufacturing an optical disc pressing die according to any one of claims 1 to 7, **characterised in that** the reactive resin is a photosensitive resin.

9. A method for manufacturing an optical disc pressing die according to any one of claims 1 to 8, **characterised in that** the step of preparing the precursor includes a step of planarisation prior to the deposition of the reactive resin.

10. A method for manufacturing an optical disc pressing die according to claim 9, **characterised in that** said planarisation step is carried out through a mechano-chemical polishing.

11. A method for manufacturing an optical disc pressing die according to claim 9, **characterised in that** the step of planarisation is carried out by polishing a dry film.

12. A method for manufacturing an optical disc pressing die according to claim 9, **characterised in that** the step of planarisation is carried out using the so-called "etch back" method consisting in depositing on the precursor covered with a dielectric material having a thickness of the order of 200 to 500nm a layer of polymer resin having a plane surface, then in etching the surface with a dry etching method removing at the same speed the resin and the dielectric material up to the total elimination of the resin.

13. A method for manufacturing an optical disc pressing die according to claim 9, **characterised in that** the step of planarisation is carried out by depositing a planarising polymer layer, for example composed of a Novolak photosensitive resin or a polyimide material undergoing a first slow annealing followed by a controlled etching of said polymer layer, so as to uncover the flushing material "material 2", then a dynamic annealing at a temperature of about 110°C.

14. A method for manufacturing optical discs according to any one of the preceding claims, **characterised in that** the step of manufacturing the precursors including the guiding traces includes a step of electro-plating.

15. A method for manufacturing optical discs according to any one of the preceding claims, **characterised in that** the step of manufacturing the precursors including the guiding traces includes a step of moulding the substrate.

16. A method for manufacturing an optical disc pressing die including a step of manufacturing a precursor composed of a metallic material showing guiding elements having a predetermined radial width during a first step of manufacturing the substrate, such guiding elements being locally etched by a charring method, masked by a structured reactive resin, according to any one of claims 1 to 15, **characterised in that** the first material is by nature non sensitive to the etching of the guiding element, the radial width, upon completion of the method, of the information separate elements released from the guiding element being then determined by the initial radial width of the guiding elements and the length, in the tangential direction, of the individual information elements is determined by the reactive resin structuring method.

17. A method for manufacturing an optical disc pressing die according to any one of claims 1 to 3 or 6 to 16, **characterised in that** the step of preparing the precursor includes an operation of deposition, on the metallic substrate, of a first dividing layer having a thickness lower than the guiding relief and an outer layer made of a dielectric material and an operation of planarisation prior to the deposition of the reactive resin by an abrasion, for leaving a coating thickness between the height of the guiding relief and said height increased by the thickness of the dividing layer.

18. A method for manufacturing an optical disc pressing die including a step of manufacturing a substrate composed of a metallic material supporting protruding metallic guiding elements, such guiding elements being locally etched by a charring method masked by a structured reactive resin according to any one of claims 1 to 16, **characterised in that** the slope between the base and the top of the information element in the radial direction generated during a first substrate formation method, typically between 20 and 60° with respect to the reference plane of the substrate, is unchanged during the carrying out of the deposition and removing methods leading to an individual die, whereas this slope of the information elements in the tangential direction, typically between 40 and 90° with respect to the reference plane of the substrate is generated by a metallic etching method masked by a structured resin.

19. A method for manufacturing an optical disc pressing die according to any one of claims 1 to 3 and 6 to 18, **characterised in that** the precursor is composed by superimposing the metallic substrate, the second metallic material prior to the depositions of the material 1, with said metallic layer having the property of being able to be etched in a selective way with respect to the substrate.

20. A precursor for the implementation of the method according to at least one of claims 1 to 3 or 6 to 19, **characterised in that** it is composed by a pre-dimensioned metallic substrate having guiding traces which are composed of at least one protruding spiral, a dielectric coating layer, the thickest part of which has a thickness between the height of the guiding relief and said height increased by the thickness of the dividing layer, with a margin equal to or lower than more or less 20% of the reference thickness, with this coating being intended to receive a reactive resin.

21. A method for manufacturing an optical disc according to any one of claims 1 or 4 to 15, **characterised in that** the step of preparing the precursor includes a first operation of depositing the first material, followed by an operation of deposition of a dividing layer having a thickness lower than the guiding reliefs, then of an outer layer made of the dielectric material and an operation of planarisation for the abrasion before the deposition of the reactive resin to leave a coating thickness between the height of the guiding reliefs and said height increased by the thickness of the dividing layer.

22. A method for manufacturing an optical disc pressing die according to any one of claims 1, 4 to 16 or 21, **characterised in that** said first material is etched during said step of the customisation of the dies using said second material as a mask, **characterised in that** the original metallic substrate includes guiding grooves, the edges of which have a slope between 20 and 60° with respect to the main plane of the substrate, the second material having thus a thickness varying in a radial direction, and **in that** the second material is slowly etched during the etching of the first material, which leads to a slope of the first material in the radial direction between 20 and 60 ° with respect to the plane of the substrate and a slope between 40 and 90° with respect to the substrate in the direction tangential to the tracks.

23. A precursor for the implementation of the method according to at least one of claims 1 or 4 to 16, **characterised in that** it is composed by a pre-dimensioned metallic substrate having guiding traces which are composed by at least one embossed spiral, a first layer, possibly a dividing layer, a second layer having optical properties substantially different from those of the underlying layer at a wavelength used in an equipment making it possible to structure the reactive resin, the thickness of the thickest part of the second layer being substantially between the height of the guiding relief and said height increased by the thickness of the dividing layer, with a margin equal to or lower than more or less 20% of this reference thickness, this coating being intended to receive a reactive resin.

24. A method for manufacturing an optical disc pressing die according to any one of claims 1 to 7, **characterised in that** the reactive resin is a resin structured by a localized sublimation under the effect of a radiation.

25. A method for manufacturing optical discs according to any one of claims 1 to 14, **characterised in that** the step of manufacturing the precursors includes, if need be, a step of deposition of a dividing layer, at least a step of deposition of a layer of a conducting material in the preparation die, then of deposition of the substrate material on said deposit of conducting material, then of dividing said deposits with the die.

26. Etching equipment for the implementation of the method according to at least one of claims 1 to 13, **characterised in that** it includes a magnetic rotating support providing the holding of the precursor during the step of etching.

27. Etching equipment for the implementation of the method according to claim 1, **characterised in that** it has a series of retractable pads protruding with respect to the precursor bearing surface on said magnetic rotating support, upon completion of the etching operation.

## Patentansprüche

1. Herstellungsverfahren einer Matrix für CD-Platten, **dadurch gekennzeichnet, dass** es einen Herstellungsschritt eines Vorläufers umfasst, der aus einem Substrat mit mindestens einer Metallschicht besteht, und mindestens eine Führungsbahn (konvex oder konkav) aufweist, einen Vorbereitungsschritt des genannten Vorläufers, darin bestehend, mindestens eine Schicht eines ersten Materials (2) auf das Substrat abzuscheiden, sowie ein zweites Material (3), das sich vom ersten Material (2) unterscheidet, die so vorbereitete Oberfläche zu erodieren, so dass an der Stelle der Führungsbahnen nur noch eines der genannten Materialien übrig bleibt, und auf die so vorbereitete Oberfläche ein reaktives Harz (beispielsweise ein lichtempfindliches Harz) abzuscheiden, wobei das Verfahren dann daraus besteht, den Vorreiter zu personalisieren durch Strukturierung der reaktiven Oberfläche gemäß matrixspezifischer Informationen, um das genannte reaktive Harz lokal zu entfernen, wobei das Verfahren einen Entwicklungsschritt umfasst, darin bestehend, die Zonen des zweiten Materials an der Stelle der demaskierten Führungsbahnen zu ätzen und dann die verbleibende Harzabscheidung und das erste Material außerhalb der Zonen, in denen es vom zweiten Material bedeckt ist, zu entfernen.

2. Herstellungsverfahren einer Matrix für CD-Platten gemäß Anspruch 1, **dadurch gekennzeichnet, dass** das zweite Material metallisch, mit dem Material des Substrats identisch ist oder nicht, und auf dem Substrat vor dem Abscheiden des ersten Materials vorhanden ist, und dass das erste Material aus mindestens einer Materialschicht mit im Wesentlichen anderen optischen Eigenschaften als diejenige aus metallischem Material besteht, mit einer in einer Ausrüstung für die Strukturierung des reaktiven Harzes verwendeten Wellenlänge.

3. Herstellungsverfahren einer Matrix für CD-Platten gemäß Anspruch 1 oder 2, **dadurch gekennzeichnet, dass** die Führungsbahnen aus mindestens einer konvexen Spirale bestehen.

4. Herstellungsverfahren einer Matrix für CD-Platten gemäß Anspruch 1 oder 3, **dadurch gekennzeichnet, dass** das erste Material aus mindestens einer Materialschicht mit im Wesentlichen anderen optischen Eigenschaften als diejenige des zweiten Materials besteht, mit einer in einer Ausrüstung für die Strukturierung des reaktiven Harzes verwendeten Wellenlänge, und dass das zweite Material, das nach dem ersten Material abgeschieden wurde, aus mindestens einer Schicht besteht, die das lokale Ätzen des ersten Materials unter dem zweiten Material während des Personalisierungsschritts des Vorreiters verhindert.

5. Herstellungsverfahren einer Pressmatrix für CD-Platten gemäß Anspruch 1 oder 4, **dadurch gekennzeichnet, dass** die Führungsbahnen aus einer Rille bestehen.

6. Herstellungsverfahren einer Pressmatrix für CD-Platten gemäß einem der vorangehenden Ansprüche, **dadurch gekennzeichnet, dass** das Substrat bildende metallische Material aus der Gruppe gewählt wird, die Nickel, Nickel-Legierungen, Chrom, Chromlegierungen, Titannitrid, Tantal, Molybdän und ihre Legierungen enthält.

7. Herstellungsverfahren einer Pressmatrix für CD-Platten gemäß einem der vorangehenden Ansprüche, **dadurch gekennzeichnet, dass** das reaktive Harz ein fotoreaktives Harz ist, das gegen die Ätzprodukte des metallischen Materials beständig ist.

8. Herstellungsverfahren einer Pressmatrix für CD-Platten gemäß einem der Ansprüche 1 bis 7, **dadurch gekennzeichnet, dass** das reaktive Harz ein lichtempfindliches Harz ist.

9. Herstellungsverfahren einer Pressmatrix für CD-Platten gemäß einem der Ansprüche 1 bis 8, **dadurch gekennzeichnet, dass** der Vorbereitungsschritt des Vorreiters einen Planierungsschritt vor dem Abscheiden des reaktiven Harzes umfasst.

10. Herstellungsverfahren einer Pressmatrix für CD-Platten gemäß Anspruch 9, **dadurch gekennzeichnet, dass** der genannte Planierungsschritt durch mechanisch-chemisches Polieren erfolgt.

11. Herstellungsverfahren einer Pressmatrix für CD-Platten gemäß Anspruch 9, **dadurch gekennzeichnet, dass** der Planierungsschritt durch Polieren auf Trockenfolie erfolgt.

12. Herstellungsverfahren einer Pressmatrix für CD-Platten gemäß Anspruch 9, **dadurch gekennzeichnet, dass** der Planierungsschritt anhand des so genannten "etch back" Verfahrens durchgeführt wird, das darin besteht, auf dem mit einem etwa 200 bis 500 nm dicken dielektrischen Material bedeckten Vorreiter eine Polymerharzschicht mit planer Oberfläche abzuscheiden, dann die Oberfläche anhand eines Trockenätzverfahrens zu ätzen, das das Harz und das dielektrische Material mit gleicher Geschwindigkeit entfernt, bis das Harz komplett verschwunden ist.

13. Herstellungsverfahren einer Pressmatrix für CD-Platten gemäß Anspruch 9, **dadurch gekennzeichnet, dass** der Planierungsschritt durchgeführt wird durch Abscheiden einer planierenden Polymerschicht, bestehend beispielsweise aus lichtempfindlichem Harz Novolak oder aus Polyimid-Material, die einem ersten Weichglühen, gefolgt von einer kontrollierten Ätzung der genannten Polymerschicht unterzogen wird, um das bündige Material "Material 2" zu entblößen, dann einem energetischen Glühen bei einer Temperatur von über 110°C.

14. Herstellungsverfahren von CD-Platten gemäß einem der vorangehenden Ansprüche, **dadurch gekennzeichnet, dass** der Herstellungsschritt der Vorreiter mit den Führungsbahnen einen galvanoplastischen Schritt umfasst.

15. Herstellungsverfahren von CD-Platten gemäß einem der vorangehenden Ansprüche, **dadurch gekennzeichnet, dass** der Herstellungsschritt der Vorreiter mit den Führungsbahnen einen Formschritt des Substrats umfasst.

16. Herstellungsverfahren einer Pressmatrix für CD-Platten, mit einem Herstellungsschritt eines Vorreiters, bestehend aus einem metallischen Material, das Führungselemente einer radialen Breite aufweist, die bei einem ersten Herstellungsschritt des Substrats festgelegt wird, wobei diese Führungselemente lokal geätzt werden anhand eines Entwicklungsverfahrens, das von einem strukturierten reaktiven Harz maskiert wird, gemäß einem der Ansprüche 1 bis 15, **dadurch gekennzeichnet, dass** das erste Material unempfindlich ist bei der Ätzung des Führungselements, wobei die radiale Breite nach dem Verfahren der aus dem Führungselement freigelegten individuellen Informationselemente dann durch die ursprüngliche radiale Breite der Führungselement bestimmt wird, und die Länge in tangentialer Richtung der individuellen Informationselemente durch das Strukturierungsverfahren des reaktiven Harzes bestimmt wird.

17. Herstellungsverfahren einer Pressmatrix für CD-Platten gemäß einem der Ansprüche 1 bis 3 oder 6 bis 16, **dadurch gekennzeichnet, dass** der Vorbereitungsschritt des Vorreiters eine Abscheidungsoperation auf das Metallsubstrat einer ersten Trennschicht umfasst, die eine kleinere Dicke als die Führungsreliefs aufweist, und eine Außenschicht aus dielektrischem Material, und einen Planierungsschritt durch Abschleifen vor dem Abscheiden des reaktiven Harzes, um eine Beschichtungsdicke übrig zu lassen, die zwischen der Höhe der Führungsreliefs und der genannten Höhe plus der Dicke der Trennschicht liegt.

18. Herstellungsverfahren einer Pressmatrix für CD-Platten, mit einem Herstellungsschritt eines Substrats, das aus einem konvexe metallische Führungselemente tragenden metallischen Material besteht, wobei diese Führungselemente lokal anhand eines Entwicklungsverfahrens geätzt werden, das von strukturierten reaktiven Harz maskiert wird, gemäß einem der Ansprüche 1 bis 16, **dadurch gekennzeichnet, dass** die beim ersten Bildungsverfahren des Substrats erzeugte Schräge zwischen der Basis und dem Gipfel der Informationselemente in radialer Richtung typischerweise zwischen 20 und 60° in Bezug auf die Bezugsebene des Substrat beträgt und bei den Abscheidungs- und Entfernungsverfahren für den Erhalt einer individualisierten Matrix unverändert bleibt, während diese Schräge der Informationselemente in tangentialer Richtung, die typischerweise zwischen 40 und 90° in Bezug auf die Bezugsebene des Substrats beträgt, anhand eines von einem strukturierten Harz maskierten Metallätzverfahrens erzeugt wird.

19. Herstellungsverfahren einer Pressmatrix für CD-Platten gemäß einem der Ansprüche 1 bis 3 und 6 bis 18, **dadurch gekennzeichnet, dass** der Vorreiter gebildet wird durch Überlagerung des metallischen Substrat mit dem zweiten metallischen Material, vor den Abscheidungen des Materials 1, wobei die genannte Metallschicht die Eigenschaft aufweist, in Bezug auf das Substrat selektiv geätzt werden zu können.

20. Vorreiter für die Umsetzung des Verfahrens gemäß mindestens einem der Ansprüche 1 bis 3 oder 6 bis 19, **dadurch gekennzeichnet, dass** er aus einem vorformatiertem Metallsubstrat besteht, das Führungsbahnen aufweist, die aus mindestens einer konvexen Spirale bestehen, und aus einer dielektrischen Deckschicht, deren dickstes Teil eine Dicke aufweist, die zwischen der Höhe der Führungsreliefs und der genannten Höhe plus der Dicke der Trennschicht liegt, mit einer Spanne von mehr oder weniger als 20 % der Bezugsdicke, wobei diese Beschichtung bestimmt ist, ein reaktives Harz aufzunehmen.

21. Herstellungsverfahren einer CD-Platte gemäß einem der Ansprüche 1 oder 4 bis 15, **dadurch gekennzeichnet, dass** der Vorbereitungsschritt des Vorreiters eine erste Abscheidungsoperation des ersten Materials umfasst, gefolgt von einer Abscheidungsoperation einer Trennschicht, die eine kleinere Dicke als die Führungsreliefs aufweist, dann eine Außenschicht aus dielektrischem Material, und eine Planierungsoperation durch Abschleifen vor der Abscheidung des reaktiven Harzes, um eine Beschichtungsdicke übrig zu lassen, die zwischen der Höhe der Führungsreliefs und der genannten Höhe plus der Dicke der Trennschicht liegt.

22. Herstellungsverfahren einer Pressmatrix für CD-Platten gemäß einem der Ansprüche 1, 4 bis 16 oder 21, **dadurch gekennzeichnet, dass** das genannte erste Material geätzt wird während des genannten Personalisierungsschritts der Matrix, durch Verwendung des genannten zweiten Materials als Maske, **dadurch gekennzeichnet, dass** das ursprüngliche Metallsubstrat Führungsrillen aufweist, deren Ränder eine Schräge zwischen 20 und 60° in Bezug auf die Hauptebene des Substrats haben, wobei das zweite Material demzufolge eine variable Dicke in einer radialen Richtung haben, und dass das zweite Material langsam während der Ätzung des ersten Materials geätzt wird, was zu einer Schräge des ersten Materials in radialer Richtung führt, die zwischen 20 und 60° in Bezug auf die Ebene des Substrats beträgt, und zu einer Schräge zwischen 40 und 90° in Bezug auf das Substrat in zu den Bahnen tangentialer Richtung.

23. Vorreiter für die Umsetzung des Verfahrens gemäß mindestens einem der Ansprüche 1 oder 4 bis 16, **dadurch gekennzeichnet, dass** er aus einem vorformatierten Metallsubstrat besteht, das Führungsbahnen aufweist, die aus mindestens einer tiefen Spirale bestehen, eventuell einer Trennschicht, einer zweiten Schicht, die optische Eigenschaften aufweist, die sich von denjenigen der darunterliegenden Schichten im Wesentlichen unterscheiden, mit einer Wellenlänge, die in einer Ausrüstung für die Strukturierung des reaktiven Harzes verwendet wird, wobei die Dicke des dicksten Teils der zweiten Schicht etwa zwischen der Höhe der Führungsreliefs und der genannten Höhe plus der Dicke der Trennschicht liegt, mit einer Spanne von mehr oder weniger 20 % der Bezugsdicke, wobei diese Beschichtung bestimmt ist, ein reaktives Harz aufzunehmen.

24. Herstellungsverfahren einer Pressmatrix für CD-Platten gemäß einem der Ansprüche 1 bis 7, **dadurch gekennzeichnet, dass** das reaktive Harz ein durch unter der Wirkung einer Strahlung lokal sublimiertes strukturiertes Harz ist.

25. Herstellungsverfahren von CD-Platten gemäß einem der Ansprüche 1 bis 14, **dadurch gekennzeichnet, dass** der Herstellungsschritt der Vorreiter eventuell einen Abscheidungsschritt einer Trennschicht, mindestens einen Abscheidungsschritt einer Schicht eines leitenden Materials in der Vorbereitungsmatrix, dann einen Abscheidungsschritt des Materials des Substrats auf der genannten Abscheidung des leitenden Materials, sowie einen Trennschritt der genannten Abscheidungen mit der Matrix umfasst.

26. Ätzausrüstung für die Umsetzung des Verfahrens gemäß mindestens einem der Ansprüche 1 bis 13, **dadurch gekennzeichnet, dass** sie einen drehbaren Magnetträger aufweist, der das Festhalten eines Vorreiters während des Ätzschritts gewährleistet.

27. Ätzausrüstung für die Umsetzung des Verfahrens gemäß Anspruch 1, **dadurch gekennzeichnet, dass** sie eine Reihe von einziehbaren Blöcken aufweist, die sich in Bezug auf die Stützfläche des Vorreiters auf dem genannten drehbaren Magnetträger nach der Ätzoperation aufrichten.
